Europäisches Patentamt

European Patent Office

Office européen des brevets

(11) Publication number: **0 323 752**
A2

# (12) EUROPEAN PATENT APPLICATION

(21) Application number: 88312390.3

(22) Date of filing: 29.12.88

(51) Int. Cl.⁴: **B29C 61/06** , **H02G 15/18**

(30) Priority: 06.01.88 GB 8800200

(43) Date of publication of application:
12.07.89 Bulletin 89/28

(84) Designated Contracting States:
BE CH DE FR LI

(71) Applicant: BOWTHORPE-HELLERMANN LIMITED
Gatwick Road
Crawley West Sussex RH10 2RZ(GB)

(72) Inventor: Bourne, Nigel David Flat 6,
Ashbourne House
Friars Lane, Barbican
Plymouth(GB)
Inventor: Neely, Nicholas Henry
14 Drake Road, Off Coombe Road
Bovey Tracey, Devon(GB)

(74) Representative: Gibson, Stewart Harry et al
URQUHART-DYKES & LORD Business
Technology Centre Senghennydd Road
Cardiff CF2 4AY South Wales(GB)

(54) **Heat-shrink sleeve closure arrangement.**

(57) A closure is formed around e.g a cable splice by positioning a heat-shrink sleeve 10 around the splice, applying heat to cause the sleeve to shrink, and then positioning a clip 20 on the sleeve at one end thereof and between two cables emerging from that end of the sleeve, the clip 20 being heat-deformable and receiving heat from the heated sleeve causing the clip to deform and hold the opposite edges of the sleeve together between the adjacent cables 1,2. After the closure cools, the clip (which is preferably bimetallic) can be removed for re-use.

FIGURE 1

## HEAT-SHRINK SLEEVE CLOSURE ARRANGEMENTS

This invention relates to heat-shrink closure arrangements which may be employed for enclosing cable splices, for example.

A known form of closure for branched cable splices comprises a heat-shrinkable sleeve, which may be either a tubular sleeve or a wrap-around type. This sleeve is positioned around the cable splice and a clip is applied to the end of the sleeve, between adjacent cables emerging from that end of the sleeve, to urge the opposite edges of the sleeve together between those cables. Heat is then applied to the sleeve to cause it to shrink and embrace the cables at its ends. Also the heat melts an adhesive coating on the inner surface of the sleeve and after shrinking and cooling has taken place this adhesive serves to adhere the sleeve to the cables. Hitherto the clip has been applied before the heat.

We have now devised an improved clip which is put into position after heat has been applied to the heat-shrinkable sleeve.

In accordance with this invention, there is provided a heat-deformable clip for applying over the edges of a heat-shrink sleeve, which clip deforms upon the receipt of heat so as to hold the edges of the sleeve together.

Also in accordance with this invention, there is provided a method of forming a closure around for example a cable splice, comprising disposing a heat-shrink sleeve around the substrates to be enclosed such that at least two substrates emerge from one end of the sleeve, then applying heat to the sleeve to cause it to shrink, and then positioning a clip on the sleeve at said end thereof and between adjacent said substrates, the clip being heat-deformable and receiving heat from the heated sleeve causing the clip to deform and hold the opposite edges of the sleeve together between said adjacent substrates.

The clip may comprise a generally U-shape bimetallic clip arranged for its opposite limbs to move closer together upon the application of heat. Once the cable splice has cooled, the clip can be removed and kept for re-use.

Embodiments of this invention will now be described by way of examples only and with reference to the accompanying drawings, in which:

FIGURE 1 is a side view of a closure being formed around a cable splice;

FIGURE 2 is a side view of one form of heat-deformable clip for use in forming the closure; and

FIGURE 3 shows alternative shapes for the clip.

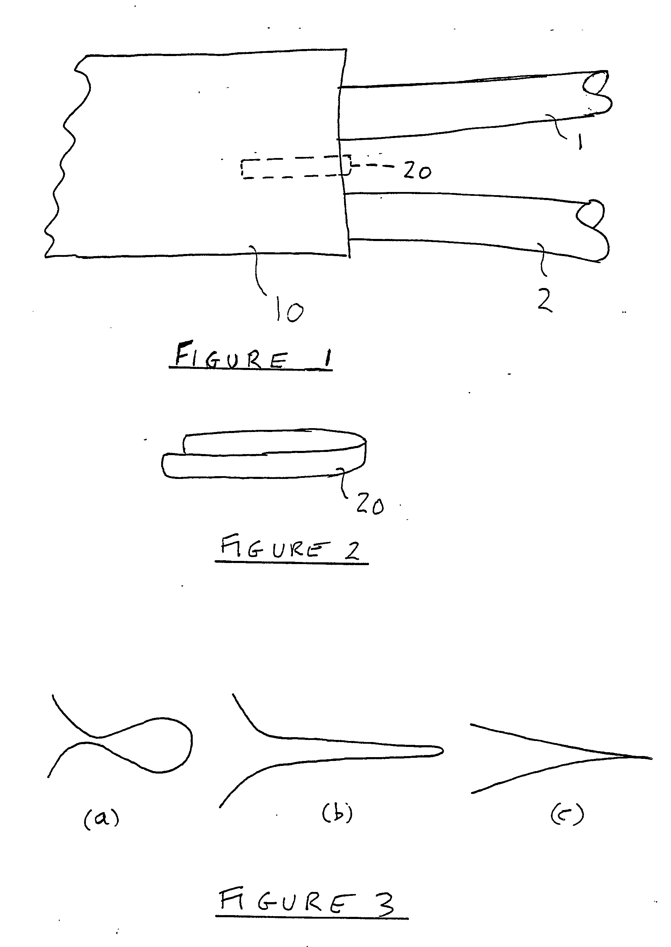

Referring to Figure 1, there is shown a heat-shrinkable closure being formed around a cable splice, the splice providing a branch with two cables 1,2 emerging from one end. A heat-shrink sleeve 10 is positioned around the splice and this sleeve may be of tubular type or wrap-around type and is provided with a coating of adhesive over its inner surface. Once the sleeve 10 has been positioned around the cable splice, heat is applied to the sleeve to cause it to shrink. Then whilst the sleeve is shrinking or at least whilst it is still hot, a generally U-shaped clip 20 as shown in Figure 2 is applied to the end of the sleeve between the branched cables 1,2 which emerge from that end of the sleeve, to the position shown in outline in Figure 1. The clip 20 is a bimetallic clip so that it deforms upon receiving heat, its opposite limbs moving towards each other. The clip 20 receives heat from the sleeve 10 to cause it to deform and press the opposite edges of the sleeve together between the branched cables 1,2. Once the splice has cooled, the clip 20 may be removed and kept for re-use, or if desired it may be left in position.

Figure 2 shows a preferred shape for the clip 20, being basically of U-shape and flat-section. Figure 3 shows three alternative shapes for the clip. Thus in Figure 3a the clip is generally pear-shaped in side view but with its opposite limbs curving progressively outwards. In Figure 3b the clip has two substantially straight limbs connected by a sharply curved end, the two limbs diverging slightly towards their free ends, which curve progressively outwards. In Figure 3c, the clip is generally V-shaped in side-view.

Preferably the clip deforms between its open end closed conditions over a temperature range of 35 to 350° C and more preferably over the range 60 to 200° C.

The clip may comprise two nickel/iron alloy layers, the alloys being supplied by Telcom Metals Ltd. of Crawley, West Sussex.

## Claims

1. A method of forming a closure around substrates, comprising disposing a heat-shrink sleeve around the substrates to be enclosed such that at least two substrates emerge from one end of the sleeve, then applying heat to the sleeve to cause it to shrink, and then positioning a clip on the sleeve at said end thereof and between adjacent said substrates, the clip being heat-deformable and receiving heat from the heated sleeve causing the clip to deform and hold the opposite edges of the sleeve together between said adjacent substrates.

2. A method as claimed in claim 1, in which the clip comprises a generally U-shape bimetallic clip arranged for its opposite limbs to move closer together upon the application of heat.

3. A method as claimed in claim 2, in which the clip is removed after the closure has cooled.

4. A heat-deformable clip for applying over the edges of a heat-shrink sleeve, which clip deforms upon the receipt of heat so as to hold the edges of the sleeve together.

5. A heat-deformable clip as claimed in claim 4, which comprises a generally U-shape bimetallic clip arranged for its opposite limbs to move closer together upon the application of heat.

6. A heat-deformable clip as claimed in claim 4 or 5, in which the clip is generally pear-shaped in side view and has its opposite limbs curving progressively outwards.

7. A heat-deformable clip as claimed in claim 4 or 5, in which the clip has two substantially straight limbs connected by a sharoly curved end, the two limbs diverging slightly towards their free ends, which curve progressively outwards.

8. A heat-deformable clip as claimed in claim 4 or 5, in which the clip is generally V-shaped in side view.

FIGURE 1

FIGURE 2

(a)                    (b)                    (c)

FIGURE 3